# EUROPEAN PATENT APPLICATION

(11) **EP 1 659 794 A1**
(43) Date of publication of application: **24.05.2006**
(21) Application number: 04105992.4
(22) Date of filing: 23.11.2004
(51) Int. Cl.: H04N 7/14

(54) **System and method for phone video conferencing**

(71) Applicant: Sony Ericsson Mobile Communications AB, 221 88 Lund (SE)
(72) Inventor: Floberg, Mikael, 260 33, Paarp (SE)
(74) Representative: Lindberg, Olle Nils Olof

(57) **Abstract**

System and method for presenting images in mobile telephony video conferencing, including a device (210) for connecting a mobile phone (101) to an external display (202), the device comprising a housing (30), said housing carrying a phone connector (31) connectable to a mobile phone for receiving video signals there from, and a display connector (34), connected to said phone connector, connectable to an external display for transmitting video signals. Preferably, a socket (32) is formed in the housing, for attaching a mobile phone thereto such that a system connector (14) of the mobile phone connects with said phone connector.

## Description

### Field of the invention

The present invention relates to the field of video conferencing through a mobile telecommunications system, and more particularly to presentation of images in a mobile video conference. The invention provides a device for connecting a mobile phone to an external display for improved video conferencing capabilities.

### Background

With the introduction of the so-called 3^{rd} generation mobile system, e.g. the WCDMA system, the possibility to convey more advanced data to wireless communication terminals has been provided. By implementing cameras in the mobile phones, the possibility of performing wireless video conferencing is now a reality.

Still, it is a general market desire to have compact mobile phones, such that they can easily be carried in a pocket. A compact phone format will of course put constraints on the functions and performance of the phone. For one thing, memory space in the phone will be limited, as will the processor power usable for processing e.g. media data. As far as video conferencing is concerned, the sound quality of a small speaker will never be the same as for a larger speaker of e.g. a stereo set, neither will the experience of viewing a compact display be the same as watching a larger screen. In the context of communication quality, a wireless video conference performed with mobile phones will of course not fully replace that of a face to face communication. So, even if it will be possible to access a wider range of different kinds of data, the phone may be a limiting factor.

Furthermore, a problem related to mobile phone video conferencing is that it is quite tiring for a user to hold a mobile phone in front of the face for capturing images by means of a camera integrated in the phone, and even after a short while there is generally a tendency to drop the arm holding the camera.

### Summary of the invention

It is therefore a general object of the invention to provide means for enhancing the experience and quality of service in mobile video conferencing.

According to a first aspect, this object is fulfilled by a system for presenting images in mobile telephony video conferencing, comprising a device for connecting a mobile phone to an external display, the device comprising a housing, said housing carrying a phone connector connectable to a mobile phone for receiving video signals there from, and a display connector, connected to said phone connector, connectable to an external display for transmitting video signals.

In one embodiment, a socket is formed in the housing, for attaching a mobile phone thereto such that a system connector of the mobile phone connects with said phone connector.

In one embodiment, a bottom portion of the device forms a support surface for placing the device on a desktop surface.

In one embodiment, the device comprises a camera connector, connected to said phone connector, connectable to an external camera for capturing video images and transmitting captured video images to a mobile phone connected to the phone connector.

In one embodiment, the device comprises a video camera carried in said housing, connected to the camera connector.

In one embodiment, said display connector has an interface for a video cable, for connection to a television set.

According to a second aspect, the object of the invention is fulfilled by a method for presenting images in mobile telephony video conferencing, comprising the steps of:
- connecting a mobile phone to a device having a phone connector;
- connecting a display connector of the device to an external display;
- transmitting video signals from the phone to the device;
- relaying the transmitted video signals from the device to the external display; and
- presenting video images as represented by said video signals on the external display.
   In one embodiment, the step of connecting the mobile phone to the device includes
- placing the mobile phone in a socket formed in a housing of the device, thereby connecting a system connector of the mobile phone with said phone connector.

In one embodiment, the method comprises the steps of:
- connecting a camera connector of the device to an external camera;
- capturing video images with said external camera; and
- transmitting the captured video images to the mobile phone through said device.

In one embodiment, the external camera is carried in said device.

In one embodiment, the method comprises the step of:
- receiving video data in the mobile phone in a video conference with another caller party, which video data is decoded to video signals in the mobile phone.

### Brief description of the drawings

The features and advantages of the present invention will be more apparent from the following description of the preferred embodiments with reference to the accompanying drawings, on which
Fig. 1 schematically illustrates a state of the art scenario for a wireless video conference over a mobile telephony network:
Fig. 2 schematically illustrates a system for video conferencing over a mobile telephony network according to an embodiment of the invention;
Fig. 3 schematically illustrates a device for connecting a mobile phone to an external display for use in video conferencing, according to an embodiment of the invention;
Fig. 4 schematically illustrates a second embodiment alternative to that of Fig. 3; and
Fig. 5 schematically illustrates a third embodiment alternative to that of Figs 3 and 4.

### Detailed description of preferred embodiments

The present description relates inter alia to the field of wireless radio communication. The following description refers to a mobile phone, which is intended to mean any type of radio communication terminal devised for radio communication with a radio station, which radio station also may be a mobile phone or e.g. a stationary base station. Consequently, the term mobile phone includes mobile telephones, pagers, communicators, electronic organisers, smartphones, PDA:s (Personal Digital Assistants), laptop computers, and DECT terminals (Digital Enhanced Cordless Telephony), or any other type of electronic device having means for wireless communication of video images in a video conference. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

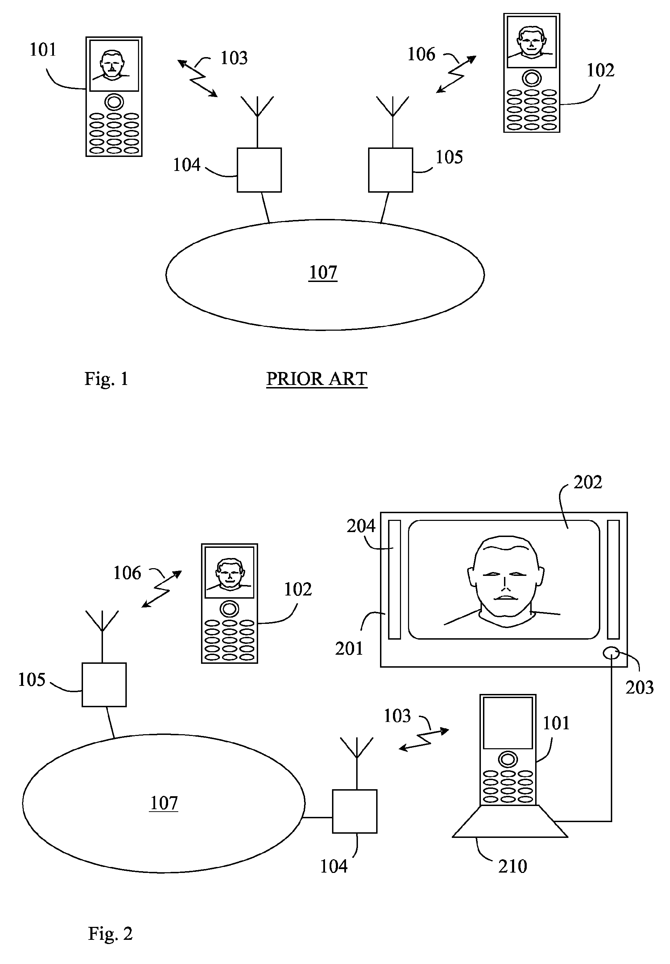

Fig. 1 schematically illustrates a state of the art scenario for video conferencing between a first mobile phone 101 and a second mobile phone 102 over a wireless network 107. The first mobile phone 101 has established a wireless connection 103 with a first base station 104 of network 107. The second mobile phone 102 has established a wireless connection 106 with a second base station 105, which is directly or indirectly connected to network 107. In a typical video conference over a mobile telephony network, a user of first phone 101 captures an image of him- or herself using a built-in camera of mobile phone 101, and transmits image data representing the captured image to phone 102, where it is presented on a display of phone 102 to a user of the second phone. In the corresponding manner, the user of phone 102 captures an image of him- or herself using a built-in camera of mobile phone 102, and transmits image data representing the captured image to phone 101, where it is presented to the user of the first phone 101 on a display of phone 101.

Fig. 2 illustrates a first embodiment of the invention. Features and elements corresponding to those of Fig. 1 carry like reference markings. In order to enhance the performance of mobile phone video conferencing, a device 210 is provided for relaying video signals, which are decoded from video data received in the first mobile phone 101 during the video conference, to a connector 203 of an external display 202, preferably a larger display the one on phone 101. Preferably, the external display 202 is the screen of a television set 201, as illustrated, or a computer display. Which type of display is used is not of importance for the invention, but possible types include LCD, plasma display and conventional CRT. In the embodiment of Fig. 2, the connected television set 201 further includes at least one speaker 204, and any audio data received in phone 101 during the video conference is in one embodiment likewise relayed to television set 201 for presentation through speaker 204.

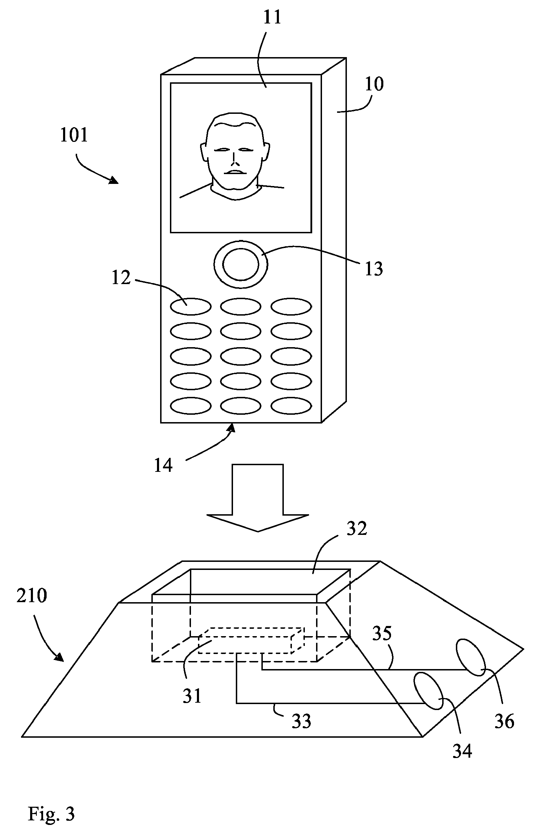

Fig. 3 schematically illustrates first mobile phone 101 and its attachment to device 210. Mobile phone 101 may take any shape, as is well known. The drawing indicates a stick type phone, but it may equally well take the shape of a clamshell type phone, a jack-knife type phone, a sliding cover type phone, or any other form. The drawing illustrates a perspective view of mobile phone 101 from a front side. Mobile phone 101 includes a cover 10, and on the front side a display 11 and keypad 12. Furthermore, a built-in video camera 13 is provided on the front side. Camera 13 may be rotatable to face other directions, typically a backside of phone 101. Phone 101 may alternatively have a second camera facing backwards. Though not shown in the drawing, phone 101 further includes a microphone, a speaker, a battery, an antenna, radio transceiver means, signal processing means, and a micro processor, according to the established art. At one portion of phone 101 a system connector 14 is disposed, for direct communicative access to phone 101. As is well known, a system connector may e.g. be used for charging the battery or for connecting accessories, such as portable handsfree equipment. A common approach is to place the system connector at a lower end portion of the phone, which is also illustrated in Fig. 3. Even though the exact location of the system connector is not crucial, the embodiment of device 210 as shown in Fig. 3 is shaped with respect to the system connector 14.

Device 210 preferably comprises a housing 30 carrying a phone connector 31 devised for connection to system connector 14. In the illustrated preferred embodiment, a socket 32 is formed in an upper portion of housing 30, devised to snugly receive the lower portion of phone 101, such that connection is established between system connector 14 and phone connector 31. Poles integrated in phone connector 31 are devised to connect to corresponding poles of system connector 14 from which video signals are pushed. A lead 33 connects phone connector 31 to a display connector 34 in device 210. Display connector 34 may in one embodiment be a radio transmitter, wirelessly connectable to an external display. For such an embodiment, connecting the display connector 34 to the external display means communicatively connecting the device 210 to the external display over a wireless interface. Preferably, though, display connector 34 includes video cable or a socket for a video cable, which video cable is connectable at its opposing end to connector 203 of the external display 201. As mentioned earlier, device 210 may also be arranged to relay audio signals from a connected mobile phone 101 to external speakers. In the illustrated embodiment, phone connector 31 may therefore also include audio poles devised to connect with audio signal output poles on system connector 14. In such an embodiment, lead 33 may also include cables interconnecting the audio poles of phone connector 31 with a speaker connector. In a preferred embodiment, display connector 34 acts as both a video connector and an audio connector, for direct connection to e.g. a television set. In one embodiment, device 210 further comprises a microphone, preferably facing its front side (not shown), arranged to relay audio signals as captured by said microphone to a connected mobile phone 101. In such an embodiment, phone connector 31 also includes audio poles devised to connect with audio signal input poles on system connector 14. Implementing a speaker in the stationary device 210 means that a less compact speaker may be used than the one in the mobile phone 101, thus offering better quality for handsfree audio performance. If the microphone of the mobile phone 101 itself is used, socket 32 is preferably shaped in such a way as to allow free access to the speaker, by means of a recess or a bore at the front portion of the device where the speaker will be located when the mobile phone is inserted in socket 32.

Device 210 preferably has a shape with a considerably wider base than the lower portion of phone 101, such that when phone 101 is placed in socket 32 it is conveniently supported in an upright or slightly angled position. This way, the user of phone 101 may place device 210 on e.g. a desktop and easily direct the camera 13 towards him- or herself, without having to hold the phone. In a preferred embodiment, a part of the device 210 in which socket 32 is formed, is slightly rotatable, such that the line of sight of camera 13 may be raised or lowered.

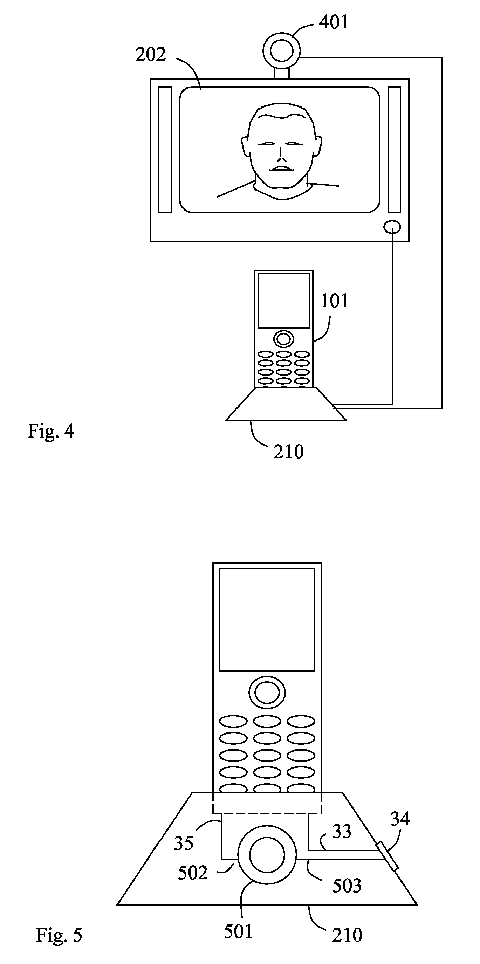

Fig. 4 illustrates an alternative embodiment, in which also an external camera 401 is connected to a camera connector of device 210. The camera connector may be the same as display connector 34, or a different connector. Similar to display connector 34, the camera connector may in one embodiment be a radio transmitter, wirelessly connectable to the external camera 401. Preferably, though, the camera connector includes camera cable or a socket for a camera cable, which camera cable is connectable at its opposing end to a cable connector of the external camera 401.

With reference again to Fig. 3, that drawing illustrates an embodiment with a separate camera connector 36, connected by means of a lead 35 to phone connector 31. Poles integrated in phone connector 31 are devised to connect to corresponding poles of system connector 14, from which video signals representing video images captured by external camera 401 are received in phone 101.

The external camera 401 may e.g. a digital portable video camera, or a so-called web camera, placed on or adjacent to the external display 202. For the sake of simplicity, Fig. 4 does not include the remote end phone 102 and the communicative path between the two phones. However, the embodiment of Fig. 4 may be used for mobile video conferencing using both an external display 202 and an external camera 401, the latter preferably having higher performance than the built- in camera 13 of phone 101. This way, both the user of phone 101 and the remote user of phone 102 will benefit from the use of the invention.

Fig. 5, finally, schematically illustrates a third embodiment of the invention, in which an external camera 501 is integrated in the housing of device 210. The corresponding camera connector 502 is therefore enclosed inside housing 30. Furthermore, camera 501 is preferably also connected to display connector 34, such that images captured by external camera 501 may also be displayed on external display 202, solely or in a split screen. An advantage with the embodiment of Fig. 5 over that of Fig. 4 is reduced cabling, and therefore easier use for technically non-skilled users. Similar to what was outlined for Fig. 3, a holder for built-in external camera 502 may be devised to be slightly rotatable for raising or lowering the line of sight of camera 501.

As far as the mobile phone 101 is concerned, no special measures need to be taken to make it work properly with the device 210 according to the invention. The only thing that is needed is that video signals decoded in the mobile phone 101 from received video data during a video conference are also pushed to poles of its system connector 14. In this context, it should be noted that mobile phone 101 may be placed in the device 210 before or after initiating a video conference, i.e. before or after receiving video data in the mobile phone 101 in a video conference with another caller party. The received video data is decoded to video signals in the mobile phone, presentable on a video display. Furthermore, the video signals are pushed to the system connector. The mobile phone may further be devised to sense whether or not an external device 210 is connected to system connector 14, e.g. by means of an applied voltage pulse and detection of the voltage drop on the related video poles, and comprise a control function devised to push video signals only in case of detection of connection to such a device 210. For embodiments including an external camera 401 or 501, the phone 101 must further be capable of receiving video signals on poles of the system connector 14, for transmission to the remote party phone 102 in the video conference. The preferred embodiments described above include a socket for mechanically attaching the mobile phone 101 to the device 210. In a simpler embodiment, a cable connection may be employed between system connector 14 of mobile phone 101 and phone connector 31 of device 210. An advantage with such an embodiment is that device 210 need not be mechanically shaped to a particular type of phone, only to the shape of the system connector 14, which generally changes less or not at all between different models of a certain brand of mobile phones. An embodiment with cable connection to device 210 may still include a cradle for supporting the terminal in a certain desired position, if the built-in camera 13 is to be used.

The presented embodiments are not to be interpreted as limitations to the invention, the scope of which is limited only by the appended claims.

## Claims

1. System for presenting images in mobile telephony video conferencing, **characterised by** a device (210) for connecting a mobile phone (101) to an external display (202), the device comprising a housing (30), said housing carrying a phone connector (31) connectable to a mobile phone for receiving video signals there from, and a display connector (34), connected to said phone connector, connectable to an external display for transmitting video signals.

2. The system as recited in claim 1, **characterised in that** a socket (32) is formed in the housing, for attaching a mobile phone thereto such that a system connector (14) of the mobile phone connects with said phone connector.

3. The system as recited in claim 1 or 2, **characterised in that** a bottom portion of the device forms a support surface for placing the device on a desktop surface.

4. The system as recited in any of the preceding claims, **characterised in that** the device comprises a camera connector (36, 502), connected to said phone connector, connectable to an external camera (401,501) for capturing video images and transmitting captured video images to a mobile phone connected to the phone connector.

5. The system as recited in claim 4, **characterised in that** the device comprises a video camera (501) carried in said housing, connected to the camera connector.

6. The system as recited in any of the preceding claims, **characterised in that** said display connector has an interface for a video cable, for connection to a television set (201).

7. Method for presenting images in mobile telephony video conferencing, comprising the steps of:
- connecting a mobile phone (101) to a device (210) having a phone connector (31);
- connecting a display connector (34) of the device to an external display (202);
- transmitting video signals from the phone to the device;
- relaying the transmitted video signals from the device to the external display; and
- presenting video images as represented by said video signals on the external display.

8. The method as recited in claim 7, wherein the step of connecting the mobile phone to the device includes
- placing the mobile phone in a socket (32) formed in a housing (30) of the device, thereby connecting a system connector (14) of the mobile phone with said phone connector.

9. The method as recited in claim 7 or 8, comprising the steps of:
- connecting a camera connector (36,502) of the device to an external camera (401,501);
- capturing video images with said external camera; and
- transmitting the captured video images to the mobile phone through said device.

10. The method as recited in claim 9, wherein the external camera (501) is carried in said device.

11. The method as recited in claim 7, comprising the step of:
- receiving video data in the mobile phone (101) in a video conference with another caller party, which video data is decoded to video signals in the mobile phone.
